(19) Europäisches Patentamt
European Patent Office
Office européen des brevets

(11) **EP 3 944 078 B1**

(12) **EUROPEAN PATENT SPECIFICATION**

(45) Date of publication and mention
of the grant of the patent:
**20.12.2023 Bulletin 2023/51**

(21) Application number: **20724190.2**

(22) Date of filing: **20.03.2020**

(51) International Patent Classification (IPC):
**G06F 9/451** (2018.01)    **G06N 3/10** (2006.01)
**G06F 16/957** (2019.01)    **G06F 3/048** (2013.01)

(52) Cooperative Patent Classification (CPC):
**G06F 9/451; G06F 16/9577; G06N 3/105**

(86) International application number:
**PCT/IB2020/052592**

(87) International publication number:
**WO 2020/188536 (24.09.2020 Gazette 2020/39)**

(54) **DYNAMIC MANAGEMENT SYSTEM FOR USER-CONTEXTUALIZED WEB INTERFACES AND RELATED OPERATING METHOD**

DYNAMISCHES VERWALTUNGSSYSTEM FÜR BENUTZERKONTEXTURISIERTE WEB-SCHNITTSTELLEN UND ZUGEHÖRIGES BETRIEBSVERFAHREN

SYSTÈME DE GÉNÉRATION DYNAMIQUE D'INTERFACES WEB CONTEXTUALISÉES PAR L'UTILISATEUR ET PROCÉDÉ DE FONCTIONNEMENT RESPECTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2019 PT 2019115379**

(43) Date of publication of application:
**26.01.2022 Bulletin 2022/04**

(73) Proprietor: **Altice Labs, S.A.**
**3810-106 Aveiro (PT)**

(72) Inventors:
• **DA SILVA FURÃO, Sara**
**3810-106 Aveiro (PT)**
• **MIGUEL SOUSA, Jorge**
**3810-106 Aveiro (PT)**
• **MIGUEL MONTEIRO, Jorge**
**3810-106 Aveiro (PT)**

(74) Representative: **Arnaut, José Luis**
**Rui Pena Arnaut & Associados**
**Rua Sousa Martins, 10**
**1050-218 Lisboa (PT)**

(56) References cited:
**EP-A1- 1 971 118**    **EP-A2- 1 170 659**
**WO-A2-2010/048274**    **US-A1- 2017 371 404**

• **XIANGNAN HE ET AL: "Neural Collaborative Filtering", WORLD WIDE WEB, INTERNATIONAL WORLD WIDE WEB CONFERENCES STEERING COMMITTEE, REPUBLIC AND CANTON OF GENEVA SWITZERLAND, 3 April 2017 (2017-04-03), pages 173-182, XP058327166, DOI: 10.1145/3038912.3052569 ISBN: 978-1-4503-4913-0**

**Description**

FIELD OF THE INVENTION

This invention fits in the field of dynamic generation of web interfaces. In particular, this invention falls within the scope of web interfaces which are customizable according to users.

BACKGROUND OF THE INVENTION

Due to the exponential growth in the use of web and mobile applications, information systems are increasingly complex, undergoing changes and transformations increasingly faster, with a need for support systems to evolve and adapt, just as fast, to this new reality and experience. The creation of adaptable web content, such as web pages or applications, provides richer interactions to the user, contextualized in their daily use, making interfaces "intelligent" and thus improving the interactions between the users and these systems.

Web content is typically developed using high-level code structures, hereinafter referred to as frameworks, or web software development technology. New generation web frameworks, oriented to web components, allow the creation and reuse of components. Examples of web frameworks are React.js, Angular.js or Vue.js, which aim to streamline and facilitate the process of creating web components. However, in their genesis, they all imply programming training, which in many cases are highly demanding. High-level frameworks, on the other hand, allow anyone without much programming knowledge to create their own web content, such as a website or web application, because, theoretically, it is only necessary to drag-and-drop elements so as to arrange them in a more intuitive manner, making the process automated and dynamic. They are known as WYSIWYG frameworks, "What You See Is What You Get". Examples of these frameworks are OutSystems, Salesforce, Mendix, SkavaSTUDIO or Wix.

The use of the above mentioned technologies, in complementarity with automatic learning algorithms to detect behavioural patterns in interactions (of each user with the interface), allows solutions such as Facebook, Amazon, or even Netflix, to tailor the content presented to the user in question, thus improving the user experience.

Document US 2017/371404 discloses a system and method for selecting an application dialog layout design, based on a response pattern for a task-based application. A plurality of user inter-face layouts may be generated based on a first user interface layout, where the first user interface layout is associated with a task included in a process of a computer-implemented software application. One or more performance metrics associated with each user interface layout of the plurality of user interface layouts may be monitored, where the one or more performance metrics characterize a performance of the task by one or more task users. A second user interface layout may be selected based on an analysis of the one or more performance metrics. The second user interface layout may be provided to a plurality of users of a computer-implemented software application.

XIANGNAN HE ET AL: "Neural Collaborative Filtering", discloses the use of deep neural networks for modelling users and items as context-aware with the purpose of learning from implicit data for building recommendation systems. It further discloses the use of a user-item interaction matrix.

However, none of the existing web development frameworks is based upon the knowledge of the user, in particular his preferences and interaction patterns with the website or web application, in order to tailor the presentation/structure (layout) of the respective web content, dynamically and in real time.

SOLVED TECHNICAL PROBLEMS

In the present invention, it was intended to develop a solution for the creation or modification of graphic interfaces, adaptable to a user, the said solution being characterized by the implementation of automated and dynamic processes, and using Artificial Intelligence in order to ensure their correct adaptation to contextualized requirements for their use by different users.

This invention describes a solution for the dynamic generation of contextualized web interfaces according to the user, representing an alternative to the creation or manual modification of graphical interfaces which, given the huge efforts involved for the managers of the respective web contents, often make their timely customization unfeasible.

SUMMARY OF THE INVENTION

The invention is set out in the appended set of claims.

More particularly, it relates to a method for generating web interfaces contextualized per user and to a system implementing it.

## DESCRIPTION OF THE FIGURES

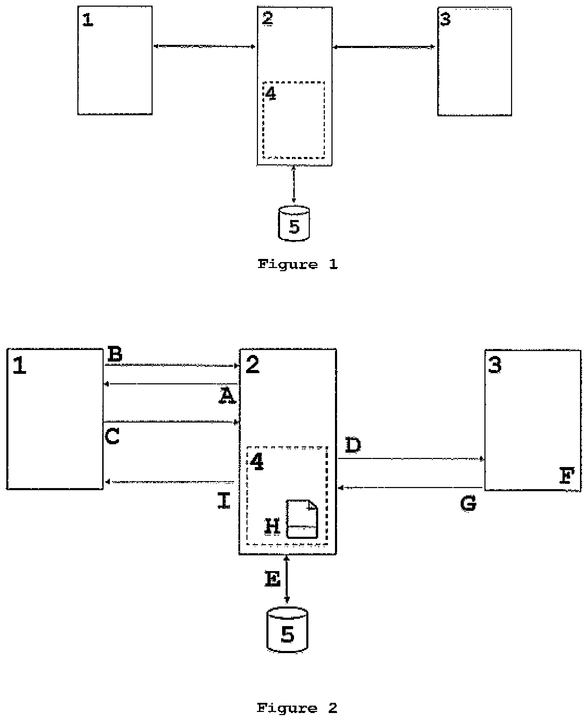

In figure 1, the developed system for dynamic generation of web interfaces is conceptually presented, where the numeric reference signs mean:

1 - client web browser;
2 - web server;
3 - Artificial Intelligence module;
4 - interface generator module;
5 - database.

Figure 2 illustrates the flow of operations performed between the constituent elements of the developed system, where the reference signs mean:

1 - client web browser;
2 - web server;
3 - Artificial Intelligence module;
4 - interface generator module;
5 - database;
A - user credentials request;
B - user authentication;
C - sending input parameters;
D - sending formatted input parameters;
E - storage and/or access to input parameters;
F - dominant layout identification;
G - sending of dominant layout identification;
H - generation of JSON file;
I - sending customized web interface to the client web browser.

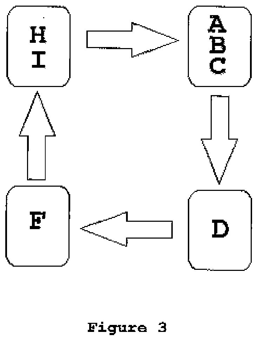

Figure 3 is a schematic representation of the method for operation of the developed system for dynamic generation of web interfaces, illustrating its recursive character, and where the reference signs mean:

A - user credentials request;
B - user authentication;
C - sending input parameters;
D - sending formatted input parameters;
E - storage and/or access to input parameters;
F - dominant layout identification;
G - sending of dominant layout identification;
H - generation of JSON file;
I - sending customized web interface to the client web browser.

## DETAILED DESCRIPTION OF THE INVENTION

The main objective of this invention is the definition and implementation of methodologies based on Artificial Intelligence, in particular automatic learning techniques, for real-time generation of dynamic web interfaces, which are adaptable according to the user's behaviours and characteristics.

Thus, the creation of web content, such as adaptable and contextualized applications or web pages, provide richer interactions allowing web servers (2) to model the information provided by a client web browser (1) - interface to a particular web content hosted on a web server (2) - delivering the information in the best possible way, with a better user experience.

This invention describes a solution allowing to dynamically and in real-time generating web interfaces contextualized per user. That is, for each user there is an identifying combination, elected by a mathematical statistical model MI(f), which allows to generate the layout at the moment in which an application or website is logged in by a user.

The system is defined through an architecture comprised of a web server (2), a client web browser (1), an Artificial Intelligence module (3), an interface generator module (4) and a database (5).

More particularly, the web server (2) represents the user interface, through the client web browser (1), with the web content hosted on it. It is responsible for interacting with the client's web browser (1), and can either function as a render server - HTML generated on the server side - or render client - HTML generated in the browser. The web server (2) is connected to the database (5) so that it can access and store input parameters collected by the client web browser (1). The input parameters are variables that allow identification of the web content, identification of the user and identification of the user's interactions with the client web browser (1), within the scope of the identified web content. These input parameters are the basis of the developed system and are later forwarded to the Artificial Intelligence module (3).

The Artificial Intelligence module (3) consists of computational requirements programmed to implement a model for dynamic generation of web interfaces, designed to generate at least one alternative layout - web content distribution and arrangement mode in the client web browser (1) - the said layout being adaptable to each user, based on input parameters collected from the user's navigation in the client web browser (1).

Running the model involves a training stage and a test stage. To train the model, the input parameters resulting from each user's interaction with the client web browser (1) are used. This set of parameters allows to offer relevant information to the model, so that its predictions can, in a continuous and recursive way, offer each user, individually, an increasingly adapted interface. To collect the input parameters, a discrete approach has been adopted, where data concerning the interactions of users with the client web browser (1) are stored in order to obtain a pattern of behaviour and preferences (for example, which elements or which characteristics the user has selected). For each user previously authenticated in the system, the following input parameters are collected during the interactions: 1) user identification, 2) identification of the web content being used and 3) selected entity. The developed model assumes the following characteristics:

User:

The whole system presupposes an authentication so that the input parameters, which are the basis of the web interface dynamic generation model developed, can be associated to a particular user and, accordingly, the alternative layouts can be generated.

Web content:

The term "web content" shall be understood as referring to an application or web page. Similarly to the user identification, the identification of the web content is important so that it can be associated to the corresponding data of user interactions, which will be at the origin of the adaptation to be made to the layout thereof.

Entity:

Entity is a representation of a set of information about a given concept of the web content. The whole entity has attributes, which are the information referencing the entity. An entity may have several web components associated, such as filtering menus, tables or text boxes, among others, each of them with intrinsic characteristics (e.g.: sorting of a table, number of records displayed, zoom) that can be modelled.

The input parameters are stored in a database (5) connected to the web server, in order to be later used as input data for the MI(f) model. Regarding the user interactions with the client web browser (1), these are collected in a non-intrusive way and concern the information on the use of the web components, including their identification as well as their characteristics and degrees of freedom. Each web component (tables, text boxes, etc.) inherits the same structure within the system, enabling the existence of common characteristics/patterns, such as: component identification, name, visibility, among other characteristics; relationship between components, that is, if they have the ability to interact with each other.

Before the input parameters are transmitted to the Artificial Intelligence module (3), they go through a previous step of adapting their format to the algorithm underlying the model to be implemented. In this respect, although data on input parameters can be both discrete (numerical) and categorical, since most automatic learning algorithms that can be run by the module (3) obtain better performance results when they have binary data as input data, the model was chosen to work with data representations in numeric vectors. Thus, the model will receive the already treated set of input parameters sent by the web server (2). In this regard, and taking into account the type of data collected (numeric vector), the generic representation of the model implemented by the Artificial Intelligence module (3) uses a Deep Neural Network Classifier algorithm, this being ideal for deep models that perform multi-class classifications (each class represents a layout) through advanced neural networks, and which is based on the analysis and processing of a matrix ($M$) of interactions, whose rows ($i$) represent the web components (any type of component can be modelled), and the columns ($j$) of the matrix represent the total characteristics of all components. Since ($j$) depends on ($i$), the number of characteristics varies according to the components of the web content ($y$). This matrix is influenced by the web content, the user, and the existing entities in the respective web content. The entity is represented as a component of the matrix, where (**k**) represents the number of interactions that the user has had until now.

$$\mathbf{M}_k^x(y) \begin{bmatrix} a1,1 & \cdots & a1,j \\ \vdots & \ddots & \vdots \\ ai,1 & \cdots & ai,j \end{bmatrix} \text{where } ai,j = \begin{cases} 1, \text{if component } i \text{ and characteristic } j \text{ exist} \\ 0, \text{otherwise} \end{cases}$$

(Eq.1)

*x*: **user,**

**y: web content,**

**k: No. of interactions,**

**i: No. of components of web content y,**

**j: total number of characteristics (j depending on i)**

After obtaining the matrix (**M**), a MI(f) model is applied to the set of matrices. For each matrix, the MI model delivers the alternative layout ($\ell$).

$$f(M_k) = \ell_k$$

(Eq.2)

*f: ML model*

$M_k$: *Matrices*

$\ell_k$: *Layouts*

Finally, the trend is applied to the set of alternative layouts, in order to obtain the dominant layout.

$$\mathbf{M}_o = \{\ell_1, \ell_2, \ell_3, \ell_4, \dots, \ell_k\}$$

(Eq.3)

The interface generator module (4) is in connection with the Artificial Intelligence module (3) and has computational requirements programmed to generate, dynamically and in real time, a new layout contextualized per user, which can be consumed by the web server (2), based on the identification of the dominant layout generated by the Artificial Intelligence module (3).

This invention also describes the method for operation of the system intended for dynamic generation of web interfaces, the said method comprising the following steps:

i. **Resource Extraction:** collection of input parameters relevant to the customization to be performed in the layout of the web content to be presented by the client web browser (1). This collection is made by the client's web browser (1), during the period in which the user is interacting with it, the said collection being completely non-intrusive and only dependent on the interactions performed during navigation. Non-intrusive approach, in the context of the present invention, is understood as the user not being disturbed with questions whose answers contribute to the definition of his "profile", such as his personal tastes, preferences, etc.

ii. **Data sending and processing:** the input parameters collected by the client web browser (1) are then sent to the web server (2), where they are submitted to various data processing processes (discretization, binary conversion), before being sent to the Artificial Intelligence module (3), in order to present a format that is interpretable by the later.

iii. **Dynamic generation model:** Once the input parameters are properly formatted, the web server (2) sends them to the Artificial Intelligence module (3), which will process them according to a model developed for dynamic generation of web interfaces contextualized per user, which uses a Deep Neural Network Classifier algorithm for analysis and processing of the interaction matrix (**M**). The Artificial Intelligence module (3) receives the treated input parameters and separates them into two data sets, one to be used by a training block and the other by a test block. The input parameters illustrate the behaviour and preferences of each user concerning a web interface of a specific web content, which is presented to him through the client web browser (1), so the training block is used to build the classifier - model to implement - that will analyse and process the interactions matrix (**M**). The larger this set, the more accurate the classifier will be, because the more data is tested, the more likely are the chances to get the right prediction. The test block is used to estimate the performance of the classifier, thus assessing the model accuracy. The result of applying the developed model for dynamic generation of a web interface is the identification of a dominant layout, whose identification will be sent to the interface generator module (4).

iv. **Dynamic generation of web interface:** the interface generator module (4) receives the identification of the dominant layout, assigned by the model to the specific user, being responsible for interpreting the web components that compose it, thus generating a file in an independent open-standard compact format of the JSON-type, with the configuration of the web components comprising this output combination - web layout. The generated JSON file will feed the web server (2) which, based on this information, builds the adaptable and customized user interface that will later be used by the client web browser (1). That is, the layouts, modelled into a descriptive language, have the same general base structure, so the web server (2) generator engine only navigates this structure in a recursive way, mapping the attributes in JavaScript objects. These are the web objects/components that will materialize the recommended layout.

The technical characteristics of the present invention, in its other combinations, are adequate to dynamically and real-time generating web interfaces that will evolve and be adapted to each user over time. Therefore, the invention allows web contents, such as applications/web pages, to make available the same information but in different interface perspectives, offering quick and easy access to specialized services related to each user's profile and preferences.

## Claims

1. A method for dynamic generation of web interfaces contextualized per user, comprising the following steps:

   **i.** A Web server (2), hosting at least one web content, requests credentials from a user (A);
   **ii.** Sending user authentication data (B) from a client web browser (1) to the web server (2);
   **iii.** Sending input parameters (C) from the client web browser (1) to the web server (2); input parameters relating to: identification of a web content hosted on the web server (2), user identification and set of interactions between the user and the client web browser (1), within the scope of the identified web content;
   **iv.** Processing of input parameters by the web server (2) to convert said parameters into numerical variables;
   **v.** Storage (E) of input parameters in a database (5);
   **vi.** Sending the input parameters (D) formatted into numerical variables to an Artificial Intelligence module (3) by the web server (2), to generate at least one alternative layout, $\ell_k$, for the web content, where k represents the number of interactions the user has with the web content;
   **vii.** Obtaining a dominant layout, $\mathbf{M_0}$, (F), by the Artificial Intelligence module (3); where

$$\mathbf{M}_0 = \{\ell_1, \ell_2, \ell_3, \ell_4, \dots, \ell_k\};$$

   **viii.** Sending information regarding the dominant layout (G) from the Artificial Intelligence module (3) to an interface generation module (4);
   **ix.** Generation of a JSON file (H) by the interface generation module (4);
   **x.** Sending the file to the web server (2) which, based on that information, builds an adaptable and customized user interface;
   **xi.** Sending the customized interface to the client web browser (1);

and wherein,
in step vi., the generation of at least one alternative layout includes:

- generating a matrix of interactions, $M^x_k$, based on the input parameters; the matrix of interactions, $M^x_k$, is

$$\mathbf{M}^x_k\,(y)\begin{bmatrix} a1,1 & \cdots & a1,j \\ \vdots & \ddots & \vdots \\ ai,1 & \cdots & ai,j \end{bmatrix}.$$

Where,

$$\mathrm{a}_{\mathrm{i,j}} = \begin{cases} 1, if\ component\ i\ and\ characteristic\ j\ exist \\ 0, otherwise \end{cases},$$

*x: user, y: web content, k: No. of interactions, i: No. of components of web content y, j: total No. of characteristics*
- processing the matrix of interactions, $M^x_k$, according to a model, ML, implementing a deep neural network classification algorithm, such that, $f(M_k) = \ell_k$, *f: ML* model, $M_k$: *Matrices,* $\ell_k$: Layouts, for each user x and for each user interaction k;

and wherein,
in step vii., the selection of a dominant layout involves applying a trend function to the generated alternative layouts.

2. A system for dynamic generation of web interfaces contextualized per user, comprising

- a web server (2), adapted to host at least one web content;
- a client web browser (1), adapted to interact with at least one web content hosted on the web server (2);
- an Artificial Intelligence module (3);
- an interface generator module (4);
- a database (5), configured to store input parameters related to: identification of the web content, user identification and set of interactions between the user and the client web browser (1), within the scope of the identified web content;

wherein:

- The web server (2) is connected to the database (5) and is configured to control the access and storage of input parameters in the said database (5); the web server (2) comprising a data processing module configured to format the input parameters into numerical variables;
- The Artificial Intelligence module (3) comprises computational requirements programmed to implement a model configured to generate at least one alternative layout for the web content, based on the input parameters formatted into numerical variables, and to obtain a dominant layout from the alternative layouts generated;

The interface generator module (4) comprises computational requirements configured to dynamically and in real-time generate a new layout for the web content, based on the dominant layout generated by the Artificial Intelligence module; and wherein,
the web server (2), the client web browser (1), the Artificial Intelligence module (3), the interface generator (4) and the database (5) being configured to operate according to the method of claim 1.

3. A system according to claim 2, **characterized in that** the web server (2) is either render server or render client.

**Patentansprüche**

1. Verfahren zur dynamischen Erzeugung von Webschnittstellen, die pro Benutzer kontextualisiert sind, mit den folgenden Schritten:

i. Ein Webserver (2), der mindestens einen Webinhalt hostet, fordert Anmeldedaten von einem Benutzer (A) an;
ii. Senden von Benutzerauthentifizierungsdaten (B) von einem Client-Webbrowser (1) an den Webserver (2);
iii. Senden von Eingabeparametern (C) von dem Client-Webbrowser (1) an den Webserver (2); wobei sich die Eingabeparameter auf Folgendes beziehen: Identifikation eines auf dem Webserver (2) gehosteten Webinhalts, Benutzeridentifikation und Satz von Interaktionen zwischen dem Benutzer und dem Client-Webbrowser (1) im Rahmen des identifizierten Webinhalts;

**iv.** Verarbeitung der Eingabeparameter durch den Webserver (2) zur Umwandlung der Parameter in numerische Variablen;

**v.** Speicherung (E) der Eingabeparameter in einer Datenbank (5);

**vi.** Senden der in numerische Variablen formatierten Eingabeparameter (D) an ein Modul für künstliche Intelligenz (3) durch den Webserver (2), um mindestens ein alternatives Layout, $\ell_k$, für den Webinhalt zu erzeugen, wobei k für die Anzahl der Interaktionen des Benutzers mit dem Webinhalt steht;

**vii.** Gewinnung eines dominanten Layouts, $M_0$, (F), durch das Modul für künstliche Intelligenz (3); wobei $M_o = \{\ell_1, \ell_2, \ell_3, \ell_4, ... , \ell_k\}$;

**viii.** Senden von Informationen bezüglich des dominanten Layouts (G) vom das Modul für künstliche Intelligenz (3) an ein Schnittstellengeneratormodul (4);

**ix.** Erzeugung einer JSON-Datei (H) durch das Schnittstellengeneratormodul (4);

**x.** Senden der Datei an den Webserver (2), der auf der Grundlage dieser Informationen eine anpassungsfähige und kundenspezifisch Benutzerschnittstelle erstellt;

**xi.** Senden der kundenspezifisch Schnittstelle an den Client-Webbrowser (1);

und wobei,

in Schritt vi. die Erzeugung mindestens eines alternativen Layouts umfasst:

- Erzeugen einer Interaktionsmatrix, $M^x_k$, auf der Grundlage der Eingabeparameter; die Interaktionsmatrix, $M^x_k$, ist

$$M_k^x\,(y) \begin{bmatrix} a1,1 & \cdots & a1,j \\ \vdots & \ddots & \vdots \\ ai,1 & \cdots & ai,j \end{bmatrix},$$

Wo,

$$a_{i,j} = \begin{cases} 1, wenn\ Komponente\ i\ und\ Merkmal\ j\ vorhanden\ sind \\ 0, sonst \end{cases},$$

*x: Benutzer, y: Webinhalt, k: Anzahl der Interaktionen, i: Anzahl der Komponenten des Webinhalts y, j: Gesamtzahl der Merkmale*

- Verarbeitung der Interaktionsmatrix $M^x_k$ gemäß einem Modell, ML, das einen Klassifizierungsalgorithmus eines tiefen neuronalen Netzes implementiert, so dass, $f(M_k) = \ell_k$, *f: ML Modell,* $M_k$*: Matrizen,* $\ell_k$*:Layouts,* für jeden Benutzer x und für jede Benutzerinteraktion k;

und wobei,

in Schritt vii. erfolgt die Auswahl eines dominanten Layouts durch Anwendung einer Trendfunktion auf die generierten alternativen Layouts.

2. Ein System zur dynamischen Erzeugung von Webschnittstellen, die pro Benutzer kontextualisiert sind, umfassend:

- einen Webserver (2), der geeignet ist, mindestens einen Webinhalt zu hosten;
- einen Client-Webbrowser (1), der zur Interaktion mit mindestens einem auf dem Webserver (2) gehosteten Webinhalt geeignet ist;
- ein Modul für künstliche Intelligenz (3);
- ein Schnittstellengeneratormodul (4);
- eine Datenbank (5), die so konfiguriert ist, dass sie Eingabeparameter speichert, die sich auf Folgendes beziehen: Identifikation des Webinhalts, Benutzeridentifikation und Satz von Interaktionen zwischen dem Benutzer und dem Client-Webbrowser (1) im Rahmen des identifizierten Webinhalts;

wobei:

- Der Webserver (2) ist mit der Datenbank (5) verbunden und so konfiguriert, dass er den Zugriff auf und die Speicherung von Eingabeparametern in der Datenbank (5) steuert; der Webserver (2) umfasst ein Datenverarbeitungsmodul, das so konfiguriert ist, dass es die Eingabeparameter in numerische Variablen formatiert;
- Das Modul für künstliche Intelligenz (3) umfasst Rechenanforderungen, die programmiert sind, um ein Modell zu implementieren, das so konfiguriert ist, dass es mindestens ein alternatives Layout für den Webinhalt auf der Grundlage der in numerische Variablen formatierten Eingabeparameter erzeugt und ein dominantes Layout aus den erzeugten alternativen Layouts erhält;

Das Schnittstellengeneratormodul (4) umfasst Rechenanforderungen, die so konfiguriert sind, dass sie dynamisch und in Echtzeit ein neues Layout für den Webinhalt erzeugen, basierend auf dem dominanten Layout, das von dem Modul für künstliche Intelligenz erzeugt wurde; und wobei
der Webserver (2), der Client-Webbrowser (1), das Modul für künstliche Intelligenz (3), der Schnittstellengenerator (4) und die Datenbank (5) so konfiguriert sind, dass sie nach dem Verfahren von Anspruch 1 arbeiten.

3. System nach Anspruch 2, **dadurch gekennzeichnet, dass** der Web-Server (2) entweder ein Render-Server oder ein Render-Client ist.

**Revendications**

1. Procédé de génération dynamique d'interfaces Web contextualisées par l'utilisateur, comprenant les étapes suivantes :

    **i.** Un serveur Web (2), hébergeant au moins un contenu Web, demande les identifints à un utilisateur (A) ;
    **ii.** Envoi des données d'authentification de l'utilisateur (B) d'un navigateur Web client (1) au serveur Web (2) ;
    **iii.** Envoi de paramètres d'entrée (C) du navigateur Web client (1) au serveur Web (2) ; les paramètres d'entrée étant relatifs à : l'identification d'un contenu Web hébergé sur le serveur Web (2), l'identification de l'utilisateur et l'ensemble d'interactions entre l'utilisateur et le navigateur Web client (1), dans le cadre du contenu Web identifié ;
    **iv.** Traitement des paramètres d'entrée par le serveur Web (2) pour convertir lesdits paramètres en variables numériques ;
    **v.** Stockage (E) des paramètres d'entrée dans une base de données (5) ;
    **vi.** Envoi des paramètres d'entrée (D) formatés en variables numériques à un module d'intelligence artificielle (3) par le serveur Web (2), afin de générer au moins une disposition alternative, $\ell_k$, pour le contenu Web, où k représente le nombre d'interactions de l'utilisateur avec le contenu Web ;
    **vii.** Obtention d'une disposition dominante, **Mo,** (F), par le module d'intelligence artificielle (3) ; où $M_o = \{\ell_1, \ell_2, \ell_3, \ell_4, \dots, \ell_k\}$ ;
    **viii.** Envoi d'informations relatives à la disposition dominante (G) du module d'intelligence artificielle (3) à un module de génération d'interface (4) ;
    **ix.** Génération d'un fichier JSON (H) par le module de génération d'interface (4) ;
    **x.** Envoi du fichier au serveur Web (2) qui, sur la base de ces informations, construit une interface utilisateur adaptable et personnalisée ;
    **xi.** Envoi de l'interface personnalisée au navigateur Web client (1) ;

et dans lequel,
à l'étape vi., la génération d'au moins une disposition alternative comprend :

    - générer une matrice d'interactions, $M^x_k$, sur la base des paramètres d'entrée ; la matrice d'interactions, $M^x_k$, étant

$$M^x_k\,(y) \begin{bmatrix} a1,1 & \cdots & a1,j \\ \vdots & \ddots & \vdots \\ ai,1 & \cdots & ai,j \end{bmatrix},$$

où,

$$a_{i,j} = \begin{cases} 1, \textit{si le composant i et la caract\'eristique j existent,} \\ 0, \textit{autrement} \end{cases}$$

*x: utilisateur, **y:** contenu Web, **k:** nombre d'interactions, **i:** nombre de composants du contenu Web **y, j**: nombre total de caractéristiques*

- traiter la matrice d'interactions, $M^x{}_k$, selon un modèle, ML, mettant en oeuvre un algorithme de classification par réseau neuronal profond, de sorte que ***f(M$_k$) = $\ell_k$,*** *f: Modèle ML,* $M_k$*: Matrices,* $\ell_k$*: Dispositions,* pour chaque utilisateur x et pour chaque interaction avec l'utilisateur k ;

et dans lequel,
à l'étape vii., la sélection d'une disposition dominante implique l'application d'une fonction de tendance aux dispositions alternatives générées.

2. Procédé de génération dynamique d'interfaces Web contextualisées par l'utilisateur, comprenant :

- un serveur Web (2), adapté pour héberger au moins un contenu Web ;
- un navigateur Web client (1), adapté pour interagir avec au moins un contenu Web hébergé sur le serveur Web (2) ;
- un module d'intelligence artificielle (3) ;
- un module de génération d'interface (4) ;
- une base de données (5), configurée pour stocker des paramètres d'entrée relatifs à : l'identification du contenu Web, l'identification de l'utilisateur et l'ensemble d'interactions entre l'utilisateur et le navigateur Web client (1), dans le cadre du contenu Web identifié ;

dans lequel :

- le serveur Web (2) est connecté à la base de données (5) et est configuré pour contrôler l'accès et le stockage de paramètres d'entrée dans ladite base de données (5) ; le serveur Web (2) comprenant un module de traitement de données configuré pour formater les paramètres d'entrée en variables numériques ;
- le module d'intelligence artificielle (3) comprend des exigences de calcul programmées pour mettre en oeuvre un modèle configuré pour générer au moins une disposition alternative, pour le contenu Web, sur la base des paramètres d'entrée formatés en variables numériques, et pour obtenir une disposition dominante à partir des dispositions alternatives générées ;

Le module de génération d'interface (4) comprend des exigences de calcul configurées pour générer dynamiquement et en temps réel une nouvelle disposition pour le contenu Web, sur la base de la disposition dominante générée par le module d'intelligence artificielle ; et dans lequel,
le serveur Web (2), le navigateur Web client (1), le module d'intelligence artificielle (3), le générateur d'interface (4) et la base de données (5) sont configurés pour fonctionner selon le procédé de la revendication 1.

3. Système selon la revendication 2, **caractérisé en ce que** le serveur Web (2) est soit de type rendu côté serveur, soit de type rendu côté client.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017371404 A

**Non-patent literature cited in the description**

- **XIANGNAN HE et al.** *Neural Collaborative Filtering*